# EUROPEAN PATENT APPLICATION

(11) **EP 2 111 055 A1**
(43) Date of publication of application: **21.10.2009**
(21) Application number: 08103596.6
(22) Date of filing: 17.04.2008
(51) Int. Cl.: H04Q 11/00

(54) **Extended queue polling mechanism for ITU G.984 GPON system**

(71) Applicant: Nokia Siemens Networks Oy, 02610 Espoo (FI)
(72) Inventor: Hajduczenia, Marek, 4505-314 Fiaes (PT); Monteiro, Paulo Miguel, 3930-209 Ilhavo (PT); Pires, Joao J., 1400-391 Lissabon (PT); Santos, Joao Miguel, 2720-129 Amadora (PT); Silva, Henrique, Prof., 3030-076 Coimbra (PT)
(74) Representative: Bruglachner, Thomas E.

(57) **Abstract**

The invention relates to a method to allocate bandwidth to different types of traffic flows into a Gigabit Passive Optical Network (GPON) with an Optical Line Termination (OLT) and several Optical Line Units (ONU), where the traffic from the ONUs is sent upstream out of Transmission Containers (T-CONT) and each Transmission Container comprises several distinct packet buffers, out of which the transmission queues of traffic are sent, whereby each traffic flow requires a certain upstream bandwidth and the bandwidth for the transmission queues is dynamically allocated from the OLT to the specific ONU.

## Description

The invention relates to the general area of telecommunications, specifically to the Passive Optical Networks (PONs) and in particular to ITU G.984 compliant Gigabit capable Passive Optical Networks (GPON), formally specified in ITU G.984.1, ITU G.984.2 and ITU G.984.3 standards. This system differs from the previous one (ITU G.983 of BPON) primarily in that higher line bit rates are described. As a consequence of this difference, the G.984 series deals with many technical issues and features in a manner different from the G.983 series. The two systems are not interoperable i.e. a GPON can relay BPON frames while BPON system cannot support GEM (GPON specific Encapsulation Method) frames.

Data Service Framing in a GPON system is inherently different from the BPON specification, which was heavily based on the ATM cells and resulting time slot division into a constant size sub-cells, then filled with the subscriber data subject to ATM framing procedure. The GPON framing can support both ATM and GEM frames, where the GEM framing procedure is based on the Generic Framing Procedure as defined in the ITU-T Rec. G.7041 method and is similar to other data service framing techniques from a frame structure point of view. This method supports variable length frames and frame fragmentation (e.g. for Ethernet frames) with enhanced frame reassembly mechanisms.

Several different modes of data service framing can be supported in both OLT and ONUs. It is possible to use only GEM or ATM base method, or combine both in a dual mode. The incompatibility between the service framing schemes is observed only when the OLT and the ONUs use different base framing methods.

Current ITU-T recommendations on BPON and GPON assume the existence of internal scheduling mechanisms at the ONUs to control the T-CONT buffers. If a T-CONT entity is shared by a group of packet buffers, the ONU must apply a priority control task to select which buffer a packet is going to be extracted from and then sent in the allocated upstream slot.

The application of buffer management and priority scheduling in the ONU can increase the complexity of the subscriber units, equipment cost and service related expenses.

The current specifications of the ITU G.984 compliant GPON systems do not allow for direct per queue access within a T-CON entity - both the frame structures as well as the polling mechanism are not prepared for supporting such an extending addressing functionality. Due to the existence of legacy equipment deployed in the field, backward compatibility to the legacy systems must be assured.

The research article "QoS-aware dynamic bandwidth allocation algorithm for Gigabit-capable PONS" in the magazine "Frontiers of Electrical and Electronic Engineering in China", Issue July 2007, page 255-259, a dynamic bandwidth allocation scheme is proposed, which simply divides the available bandwidth by priority parameters of the T-Cont entity. There is no direct per queue access within a T-CON entity.

It is the objective of this invention to provide a per-queue polling within the given T-CONT entity which can be performed from the OLT level and individual queues can be addressed effectively via downstream bandwidth allocation grant messages whereby frame modifications are restricted to such changes which will not affect the operation of the legacy GPON equipment.

This objective is achieved by the features of claim 1. Favourable Embodiments of the invention are described in the dependent claims.

The proposed T-CONT level queue report and grant process introduces several extensions to the T-CONT management mechanisms in the actual framing architecture as specified in the ITU recommendation G.984.3. In the framework of the GPON Transmission Convergence (GTC) layer each ONU is identified by a unique identifier (ONU-ID) and each T-CONT is identified by its Alloc-ID, which is the basic control unit.

In an ONU, each T-CONT can comprise several distinct packet buffers. The ONU internally identifies and maps the queues to a specific T-CONT. The typical situation in a GPON compliant ONU is the support of different T-CONT types, where several queues can be mapped to each T-CONT.

To provide correct queue management at the OLT centralized scheduler level, current information on the queue state should be delivered by all the connected ONUs. Therefore, the ONU has to inform the OLT of the number of queues that are associated with the given T-CONT entity. This is a major concern as some of the said packet queues might be allocated to users who are only active at certain periods of time, while the queue reporting has to be continuous. Assuming that during an ONU initialization process the given user (connected to that ONU) is not active, the respective queues will not need any service since they are not receiving any subscriber frames. However, when such a user starts sending packets to the ONU interface, thus requiring allocation of the upstream channel resources, they might suffer from loss of service because of the queue existence unaware on the OLT. The dynamic support of queue activation is important to assure that the PON system is compliant with GPON dynamic ONU activation specified in G.984.3.

In the upstream direction, the support of extended grating/reporting requires mandatory ONU queue information to be delivered to the OLT. This is performed during the discovery process, when such information is sent to the OLT using the extended upstream Physichal Layer Operations, Administration and Maintenance (PLOAMu) message hereby termed Queue Activation, which will provide the information on the number of queues available per T-CONT entity in a given ONU. The QA messages are divided in two distinct messages that differ from the sender and receiver. To request the queue information from an ONU, the OLT sends a Queue Activation Request (QAR). After receiving this PLOAMu message, the ONU responds with a Queue Activation Indication (QAI) message with the different subset of queues per T-CONT.

This particular message is identified with the specific ID value of 20 (binary representation: 10100), which belongs to the block of valid, reserved control message codes, as specified in Rec. G.984.3. When an ONU receives this particular message, transmitted typically during the registration and initialization period, and identifies it as the QAR, it should respond with a QAI message to the OLT.

If new queues in an ONU are activated after the transmission of a QAI message, the given ONU can update the queue information in the OLT by sending another QAI message when granted a PLOAMu transmission. In order to provide that the OLT maintains information of a given queue, it is necessary that the new Active Queue Count value sent is higher than the one verified in the last QAI message. This means that the identification of the queues, in the OLT view point, is maintained.

In the Flags field of downstream frame 7 bits are used to quantify the number of queues per T-CONT. This provides a support of 128 independent queues and according Queue-IDs per T-CONT. The T-CONT queue count is vital for provision of QoS guarantees independently for each queue, based on the respective T-CONT affiliation. By informing the OLT that several queues exist on a specific T-CONT, the OLT is capable of dynamically addressing each queue if status reporting messaging is correctly performed.

This procedure is performed by the exchange of upstream and downstream flags and PLOAM messages. Once the registration process is completed, several PLOAM cells are exchanged to define other system parameters such as the ONU password, and the Alloc-ID for the T-CONTs of the ONU. Before an ONU can start requesting upstream slots and send the user packets, it must inform the OLT of the number of queues per T-CONT that are active. This will provide the OLT with the information about the ONU Queue-ID structure and, after receiving Dynamic Bandwidth Request (DBRu) messages, the OLT will be able to start the specific T-CONT queue addressing. For this purpose, the OLT sends the QAR message to the ONU and expects the respective response with the QAI messages. This can be done for all ONUs in the GPON. It is only after the PLOAM frame containing the QAI message with the ONU queue count that the OLT can start configuring the Port-ID for the GEM traffic flows.

The permission to transmit DBRu messages is provided by the OLT in the Flags field of the Access message contained in the PCBd header. By receiving the grant slot and the permission to transmit a DBRu message, the ONU will send it at the beginning of the allocated upstream transmission slot. In the G.984.3 specification, each DBRu refers to a particular T-CONT, which can contain several independent queues that are polled internally by an ONU priority scheduler. If specific T-CONT queues are to be addressed from the OLT, the upstream slot will contain the DBRu message for the respective queue.

When supporting several queues, the proposed extension to the GPON standard provides a quick and efficient queue status reporting mechanism. This is particularly important when silent queues suddenly start receiving packets and need an upstream slot for transmission. As mentioned before, G.984.3 recommendation provides the Ind-field that indicates the OLT of the presence of packets waiting in each T-CONT. Since it is also necessary to address individual queues inside each T-CONT, a solution is required to alert the OLT when packets are waiting in the given queue.

In order to inform the OLT that there are queues requesting the status reporting, it is proposed to use the reserved LSB bit of the Ind-field. Therefore, when an ONU needs to include a DBRu report from another queue into an allocated slot, the LSB bit is set to 1. If the OLT detects this bit with the 1 value, it will expect additional DBRu messages in the beginning of the allocated slot, after the legacy GPON headers, such as PLSu or PLOAMu. Since these incorporated DBRu messages do not belong to the queue to which the slot is allocated to, they must carry additional information on the queue they are referring to. This is performed using Extended DBRu messages (eDBRu).

The eDBRu messages have a slot for Queue-ID and another one for counting the number blocks (of 53 bytes by default) of packets waiting in the queue, and a CRC for error detection and correction. The identification of the specific addressed queue is performed by the ONU-ID, the Alloc-ID (T-CONT) to which the upstream slot was allocated to and the Queue-ID in the eDBRu message header. In order to be able to send more than a single queue report, the ONU must inform the OLT that more than one eDBRu message should be expected. For this purpose, the last LSB bit of the Queue-ID header of the eDBRU message is utilized. As mentioned before, only 7 bits are used to address the queues of a single T-CONT. This means that the last LSB bit of the Queue-ID field is left unutilized and thus can be used as a flag - providing it is set, it will indicate that one more eDBRU message follows. The reset state of the LSB indicates that it is the last queue report. Furthermore, if the LSB bit of the Ind-field contains the value 0, the OLT can be assured that there will be no eDBRu messages in the present slot. This means that the OLT will only expect the eDBRu messages if the LSB bit of the Ind-field is set to 1.

Assuming that other headers (such as PLOAMu, PLSu, or DBRu) are to be included in the frame, the new eDBRu messages will only be sent by the ONU after the transmission of these frames. This way, the OLT will only search for the eDBRu messages after receiving all the legacy headers which were expected.

As can be observed, the OLT allocates a transmission slot for two queues (1 and 2) of T-CONT Type 2. Additionally, two eDBRus from different queues (3 and 6) of the same T-CONT are also transmitted in the first slot. In order to indicate the OLT of the presence of these unaccounted two messages, the Ind field of the PLOu header has the LSB bit set to 1, thus the OLT is aware that after all the legacy headers that may have been request, there is going to be an additional eDBRu message. After finding this eDBRu message, the OLT analyses the LSB bit of the Queue-ID field. If it is set to 1, one more eDBRu message will follow. When the last eDBRu message is sent, the respective LSB bit of he Queue-ID field should be set to 0 to inform the OLT that the eDBRu messages are over and that the payload containing GEM frames is going to start.

The main difference between the standard GPON system and the extended version of the flow control mechanism is the higher number of Access fields in the downstream frames, and additional DBRu and eDBRu messages in the upstream frames, since the granularity of the addressing is higher because it reaches each queue in a particular T-CONT.

The proposed Method has the following advantages:
- more flexible GPON system configuration, where the packet scheduling is centralized and individual queues can be flexibly allocated to respective T-CONTs;
- currently, the network administrator does not have the capability to ensure efficient upstream bandwidth utilization in case of multiple queue - single T-CONT assignment - the packet scheduling carried out by the ONU does not take into account the global state of the network, thus is not optimum;
- the proposed extended queue polling mechanism maintains full backward compatibility with the existing GPON designs/systems/equipment by reutilizing the still available reserved data fields in the legacy GPON control frames and introduction of new ones in such a way that the legacy equipment would ignore the said new control messages should they be sent to them by the extended OLT;
- slots originating from individual queues can be maintained separately both in time and size, and therefore the OLT can perform intra T-CONT scheduling without the ONU's active participation;
- the ONU structure can be further simplified by complete elimination of packet schedulers and traffic shapers, because all the required operations are performed in the central OLT scheduler and distributed to ONUs in the form of orders to comply with;
- due to the centralized bandwidth management in the OLT, the upgrade of the GPON bandwidth allocation mechanism (fixed or dynamic) only demands the replacement of the OLT electronic management module avoiding the replacement/modification of the ONUs.

With the methods described above the coexistence of standard GPONs with high speed GPONs is assured by supporting both legacy ONUs and extended ONUs simultaneously with the same OLT.

The figures show some aspects of the embodiment of the invention.
- Fig. 1: shows the mixed multiplexing of traffic in a PON;
- Fig. 2: shows the relation between T-CONT and respective Queues;
- Fig. 3: shows the message exchange for extended grants/reports support;
- Fig. 4: shows the frame structure for upstream transmission allocation;
- Fig. 5: shows the structure of the upstream frame with extended Dynamic Bandwidth request messages;
- Fig. 6: shows the structure of the downstream header.

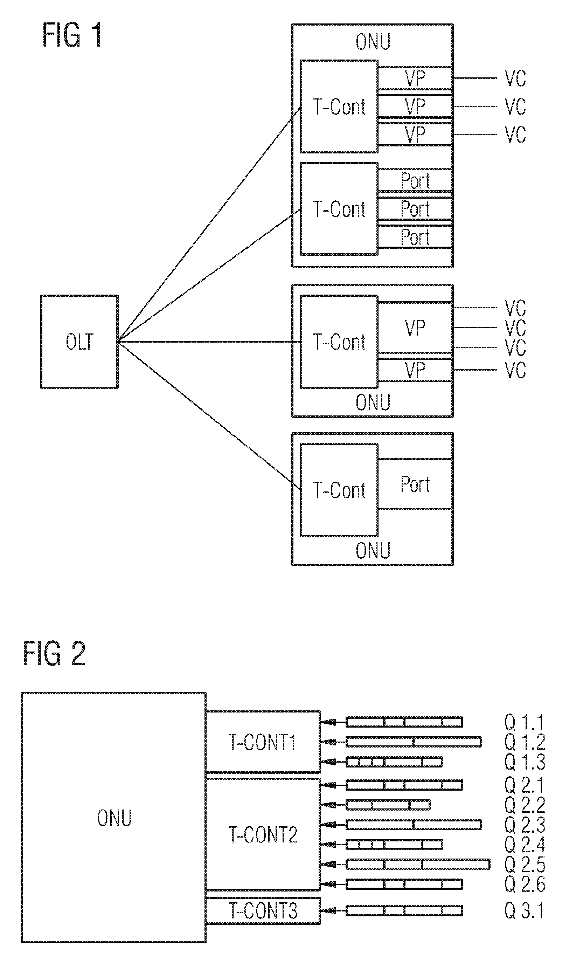

Fig. 1 shows a PON-system with an OLT and several ONUs where the ONUs support different framing modes. Each ONU supports one or more Transmission-Containers T-CONT, which are organized to hold ATM-frames with Virtual Paths VP and Virtual Circuits VC or to support GEM-frames, where the connections are identified by a Port.

The Virtual Paths VP or the Ports can carry different data rates (or bandwidth), which is indicated by different width of the corresponding symbols.

All the frames are multiplexed according to their allocated bandwidth and sent to the OLT.

Fig. 2 shows three Transmission Containers T-CONT of an ONU and the queues Q 1.1 to Q 3.1 which share the packet buffers of their T-CONT. Each T-CONT supports one or more queues with different bandwidth which is granted to the specific queue.

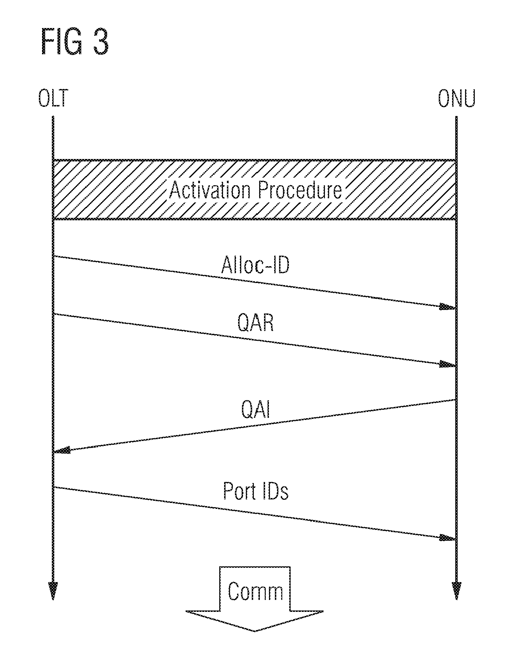

Fig. 3 depicts the control message exchange expected to take place between an OLT and an ONU in a GPON enhanced queue addressing mechanism. This scheme uses the messages defined in G.984.3.

During the ONU activation procedure, several procedures need to be accounted for. The registration process is executed under the control of the OLT. The ONU responds to messages, which are initiated by the OLT. The outline of the activation procedure is as follows:
The ONU adjusts the transmission optical power level based on the OLT signalling;
The OLT discovers the Serial Number of a new connected ONU;
The OLT assigns an ONU-ID to the ONU;
The OLT measures the arrival phase of the upstream transmission from the ONU;
The OLT notifies the ONU of the delay between the start of the downstream frame and the respective upstream frame;
The ONU adjusts the transmission phase to the notified value.

Once the activation procedure of a new ONU is completed, several PLOAM cells are exchanged to define other system parameters such as the ONU password, and the Alloc-ID for the T-CONTs of the ONU. The ONU links the T-CONTs with the respective Alloc-IDs. Before an ONU can start requesting upstream slots and send the user packets, it must inform the OLT of the number of queues per T-CONT that are active. For this purpose, the OLT sends the QAR message to the ONU (or all the ONUs connected to the PON system) and expects the respective response with the QAI messages. The T-CONT queue count is utilized by the OLT for the Queue-IDs in the dynamic bandwidth allocation.

After the QAI message with the ONU queue count the OLT starts configuring of the Port-IDs for the GEM traffic flows.

After configuring the Ports, the bidirectional data communication Comm begins.

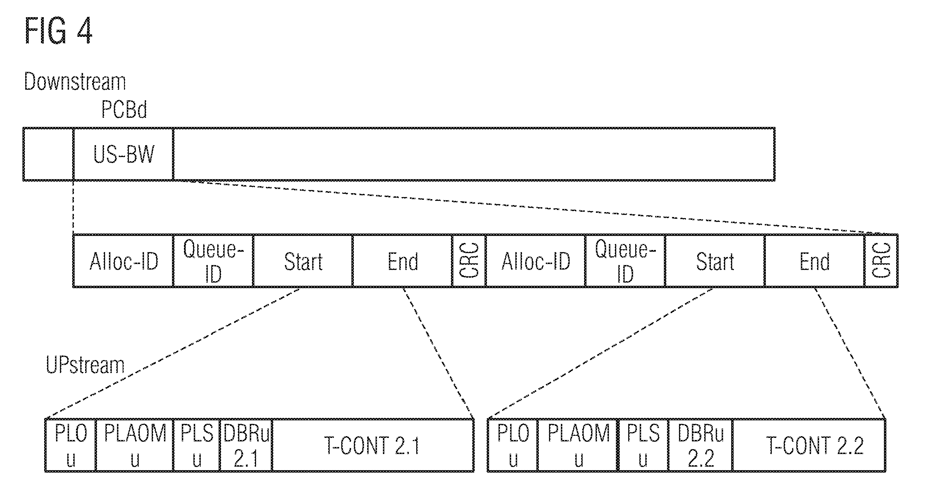

In Fig. 4 a downstream frame according to G.984.3 with a corresponding upstream frame is shown. In the header PCBd of the downstream frame an Upstream-Bandwidth map US-BW is included. It contains the Alloc-IDs and the Queue-IDs of the T-Cont-Queues with the Start and End slots. Each queue information is secured by a CRC.

The upstream frame contains several G.984.3 messages, the DBRu messages and the queue content, here depicted with DBRu2.1, T-CONT2.1, DBRu2.2 and T-CONT2.2.

The format and content of the each DBRu message is maintained according to the G.984.3 recommendation.

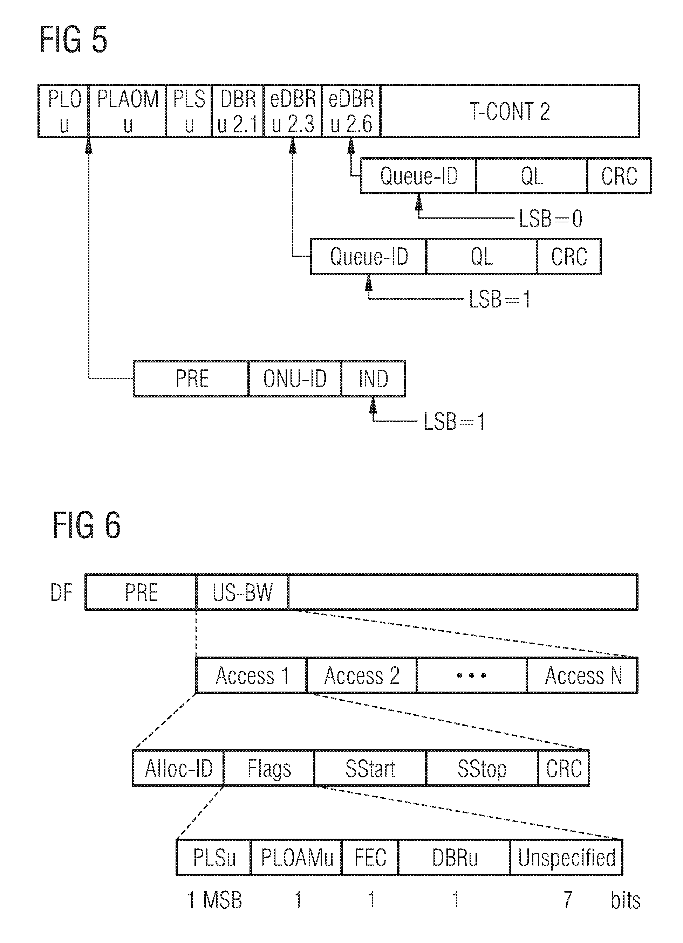

In Fig. 5 the upstream transmission of several eDBRu messages is depicted. The eDBRu messages will have a slot for Queue-ID and another one for counting the number blocks (of 53 bytes by default) of packets waiting in the queue, and a CRC for error detection and correction. The identification of the specific addressed queue is performed by the ONU-ID contained in the PLOu header, the Alloc-ID (T-CONT) to which the upstream slot was allocated to and the Queue-ID in the eDBRu message header. In order to be able to send more than a single queue report, the ONU must inform the OLT that more than one eDBRu message should be expected. For this purpose, the last LSB bit of the Queue-ID header of the eDBRU message is utilized. As mentioned before, only 7 bits are used to address the queues of a single T-CONT. This means that the last LSB bit of the Queue-ID field is left unutilized and thus can be used as a flag - providing it is set, it will indicate that one more eDBRU message follows. The reset state of the LSB indicates that it is the last queue report. Furthermore, if the LSB bit of the PLOu-Ind field contains the value 0, the OLT can be assured that there will be no eDBRu messages in the present slot. This means that the OLT will only expect the eDBRu messages if the LSB bit of the Ind field of the PLOu header is set to 1. Assuming that other headers (such as PLOAMu, PLSu, or DBRu) are to be included in the frame, the new eDBRu messages will only be sent by the ONU after the transmission of these frames. This way, the OLT will only search for the eDBRu messages after receiving all the legacy headers which were expected.

Fig. 6 shows a Downstream Frame with typical G.984.3 messages as preamble PRE and the Upstream Bandwidth map US-BW.

Each upstream allocated slot needs an 8 byte Access N. In the scope of the G.984.3 recommendation, this allocation is performed on a T-CONT Alloc-ID basis.

In order to provide queue identification flexibility for the upstream channel allocation, the identifier used in the Access must use the T-CONT (Alloc-ID) value and the number of the queue (Queue-ID) to which the upstream slot is referred to. This number will address a unique queue accordingly to the DBA scheduler implemented on the OLT side. Using the frame overhead resources provided for in the current GPON standard, it is possible to utilize the reserved bits in the Flags field to address a specific Queue-ID belonging to a given T-CONT already mentioned in the Alloc-ID field of the Grant message. The Flags field contains 12 bit for indications on how the upstream allocation slot shall be used. The meaning of each of these indications is as follows:
Bit 11 (MSB): Send PLSu (power leveling sequence): if this bit is set, the ONU shall send its PLSu information during this allocation.
Bit 10: Send PLOAMu: If this bit is set, the ONU shall send its PLOAMu information during this allocation.
Bit 9: Use FEC: If this bit is set, the ONU shall compute and insert FEC parity during this allocation. Note that this bit should be the same for the life of the Alloc-ID, and is merely an in-band confirmation of previously known data.
Bits 8 and 7: Send DBRu (mode): Depending on the contents of these two bits, the ONU will send the DBRu corresponding to the Alloc-ID or not. The code points defined are:
   00: Do not send DBRu at all.
   01: Send the 'mode 0' DBRu (two bytes long).
   10: Send the 'mode 1' DBRu (three bytes long).
   11: Send the 'mode 2' DBRu (five bytes long).
Bits 6-0: Reserved for future use.

The seven LSB bits are reserved for future application and can be utilized to specify the queue identification (Queue-ID) proposed in this report, thus allowing for addressing 128 different queues per T-CONT (Alloc-ID).

Since only one T-CONT is granted, the Alloc-ID is the same on every Access field. Additionally, the Queue-ID is included in the spare 7 bits of the Flags field referring the allocated slot to a specific queue from the T-CONT. In this way, the ONU only has to identify the correct queue and send the respective packets in the upstream slot.

### Acronyms

| | |
|---|---|
| Alloc-ID | Allocation ID for T-CONT |
| ATM | Asynchronous Transfer Mode |
| BPON | Broadband Passive Optical Networks |
| DBA | Dynamic Bandwidth Allocation |
| DBR | Dynamic Bandwidth Request |
| eDBRu | Extended Dynamic Bandwidth Request upstream |
| GEM | GPON Encapsulation Method for traffic flow |
| GFP | Generic Framing Procedure |
| GPON | Gigabit Passive Optical Networks |
| ONU | Optical Network Unit (Tln) |
| OLT | Optical Line Termination (Hub) |
| PLOAM | Physical Layer Administration and Maintenance |

### Message

| | |
|---|---|
| PLO | Physical Layer Overhead |
| PLS | Power Level Sequence |
| PON | Passive Optical Networks |
| Port-ID | Port Identification Number for GEM |
| QA | Queue Activation |
| QAI | Queue Activation Indication |
| QAR | Queue Activation Request |
| QoS | Quality of Service |
| T-CONT | Transmission Container |
| VC | Virtual Channel (ATM) |
| VP | Virtual Path (ATM) |

## Claims

1. A method to allocate bandwidth to different types of traffic flows into a Gigabit Passive Optical Network (GPON) with an Optical Line Termination (OLT) and several Optical Line Units (ONU), where the traffic from the ONUs is sent upstream out of Transmission Containers (T-CONT) and each Transmission Container comprises several distinct packet buffers, out of which the transmission queues of traffic are sent, whereby each traffic flow requires a certain upstream bandwidth, **characterized in that** the bandwidth for the transmission queues is dynamically allocated from the OLT to the specific ONU with the following steps:
a) sending a Queue Activation Request message (QAR) from the OLT to all ONUs,
b) responding of each ONU with a Queue Activation Indication message (QAI), listing the number of active queues per T-CONT with a Queue Identifier (Q-ID),
c) allocating the bandwidth for each active queue in the upstream direction by the OLT and
d) informing the ONU about this allocated bandwidth for each queue with a downstream bandwidth allocation grant message.

2. A method according to claim 1, **characterized in that** among the different types of traffic flow are Asynchronous Transfer Mode (ATM) cells and GPON-specific Encapsulation Method (GEM) frames.

3. A method according to claim 1, **characterized in that,** if the QAR-message is not responded by a specific ONU, this ONU is treated as a legacy ONU, which can only participate in the dynamic bandwidth allocation using the T-CONT (Alloc-ID) method to separate different traffic provision.

4. A method according to claim 1, **characterized in that** the QAR-message and the QAI-message are identified by a reserved control message code which belongs to the block of valid message codes for OAM purposes in a GPON-system.

5. A method according to claim 1, **characterized in that** the QAI message contains the number of active queues in each of the T-CONTs, thus informing the OLT on the number of queues which exist in the given ONU, and how they are distributed on a T-CONT basis.

6. A method according to claim 5, **characterized in that** in the QAI message Queue-IDs are sent which are used by the OLT to address the different queues.

7. A method according to claim 6, **characterized in that** the ONU updates the queue information in the OLT by sending another QAI message if new queues in an ONU are activated.

8. A method according to claim 7, **characterized in that** the update-QAI-message is sent in a frame for an established queue when the ONU is granted a PLOAMu transmission for that queue by the OLT.

9. A method according to claim 7, **characterized in that** the number of active queues is incremented if new queues in an ONU are activated.

10. A method according to claim 9, **characterized in that** 128 active independent queues are supported per T-CONT.

11. A method according to claim 1, **characterized in that** the first allocation of bandwidth to a new connected ONU is executed after discovery and registration of this ONU.

12. A method according to claim 11, **characterized in that that** the OLT starts configuring Port-IDs for the GEM traffic flows after receiving the PLOAM frame containing the QAI message with the ONU queue count.

13. A method according to claim 8, **characterized in that** in the PLOu frame an Ind-field is provided with an reserved LSB bit which is set to indicate the OLT of the presence of packets waiting in another T-CONT.

14. A method according to claim 13, **characterized in that** the OLT accepts new bandwidth requests from other queues if it detects a set LSB bit in the Ind-field.

15. A method according to claim 14, **characterized in that** the ONU send an Extended DBRu message (eDBRu) for the new activated queue in the frame of the established queue.

16. A method according to claim 6, **characterized in that** the eDBRu messages contains a slot for Queue-ID and another one for counting the number blocks of packets waiting in the queue, and a CRC for error detection and correction.

17. A method according to claim 16, **characterized in that** the Queue-ID for a given queue is used by the OLT to address that specific queue.

18. A method according to claim 16, **characterized in that** the last bit of the Queue-ID of the eDBRU message is set if one more eDBRU message follows.

19. A method according to claim 3, **characterized in that** coexistence with standard GPON systems is assured by supporting both legacy ONUs and extended ONUs simultaneously with the same OLT.
